# EUROPEAN PATENT SPECIFICATION

(11) **EP 4 043 507 B1**
(45) Date of publication and mention of the grant of the patent: **30.10.2024**
(21) Application number: 20874374.0
(22) Date of filing: 24.09.2020
(51) Int. Cl.: C08F 283/02, C09D 5/02, C08L 51/08, C09D 151/08, C08F 2/44, C09D 133/00

(54) **WATER-BASED RESIN COMPOSITION, WATER-BASED PAINT, AND PLASTIC MOLDED ARTICLE PAINTED BY SAID WATER-BASED PAINT**
WASSERBASIERTE HARZZUSAMMENSETZUNG, WASSERBASIERTE FARBE UND MIT DER WASSERBASIERTEN FARBE LACKIERTER KUNSTSTOFF-FORMARTIKEL
COMPOSITION DE RÉSINE À BASE D'EAU, PEINTURE À BASE D'EAU, ET ARTICLE MOULÉ EN PLASTIQUE PEINT PAR LADITE PEINTURE À BASE D'EAU

(30) Priority: 07.10.2019 JP 2019184505
(43) Date of publication of application: 17.08.2022
(73) Proprietor: DIC Corporation, Tokyo 174-8520 (JP)
(72) Inventor: NAKAMOTO Kazuki, Takaishi-shi, Osaka 592-0001 (JP); DOHI Kenta, Takaishi-shi, Osaka 592-0001 (JP); MUKAI Takashi, Takaishi-shi, Osaka 592-0001 (JP)
(74) Representative: TBK
(86) International application number: PCT/JP2020/035892
(87) International publication number: WO 2021/070613

(56) References cited:
- WO-A1-2012/130765
- WO-A1-2013/157479
- WO-A1-2014/004596
- WO-A1-96/01860
- CN-A- 1 880 374
- DE-A1- 10 236 395
- JP-A- 2006 249 432
- JP-A- 2015 509 989

## Description

### Technical Field

The present invention relates to an aqueous resin composition, an aqueous paint, and a plastic molded article coated with the aqueous paint.

### Background Art

Conventionally, polycarbonate-modified acrylic resins obtained by allowing unsaturated monomers to react in the presence of polyol have been proposed. Cured coating films of these resins are known to have high adhesion to substrates and excellent mechanical properties (see, for example, PTL 1).

In recent years, the paint industry has been promoting the replacement of solvent-based paints with water-based paints from the viewpoint of environmental protection and making paints non-hazardous. Water-based paints made from the polycarbonate-modified acrylic resins as described above, however, have been insufficient in adhesion to substrates and water resistance.

WO2012/130765 A1 relates to the use of an aqueous preparation for the coating of wood surfaces, wherein the aqueous preparation comprises: a hydroxyl-functional polyurethane-polyacrylate dispersion, a polyurethane dispersion, an at least partially hydrophilicized polyisocyanate and 0 to 10 weight-% of a matting agent, wherein the combined hydroxyl content of the hydroxyl-functional polyacrylate dispersion and the polyurethane dispersion is 1% to 12%.

DE 102 36 395 A1 relates to polymer dispersions for corrosion protection having emulsifiers containing phosphate groups, and the (carbon) acid groups added as stabilisers are (partially) neutralised by the addition of bases prior to polymerisation.

WO 2014/004596 A1 relates to water-based coating compositions comprising A) at least one water-dilutable polyurethane hybrid binder, obtained by polymerization of at least one polyurethane macromonomer, containing at least one lateral and/or terminal vinyl group, in the presence of at least one unsaturated monomer copolymerizable with the polyurethane macromonomer, B) optionally at least one curing agent, and C) at least one pigment, wherein the at least one polyurethane macromonomer is based on at least one polyhydroxyl compound, said polyhydroxyl compound comprises at least 50 % by weight of at least one polycarbonate polyol, which is liquid at 20°C, the % by weight are based on the total amount of the polyhydroxyl compound.

CN 1 880 374 A relates to a high solid acrylic polyurethane water-dispersible resin and method for making same, wherein the solid content of this resin is up to 41-45%, and the resin does not contain free emulsifier and organic solvent, and the procedures comprise: first it produces NCO capping polyurethane prepolymer with the ethenyl monomer part of which can be freely polymerized as medium, then obtain a water-dispersible polyurethane coated with ethenyl monomers after neutralization and water dispersion, add in the rest ethenyl monomer and initiator to perform free radical polymerization, to produce the acrylic polyurethane water-dispersible resin with a nuclear shell structure.

JP 2006-249432 A relates to a water-based copolymer dispersion comprising (A) one or more hydroxy functional copolymer synthesized from (a) one or more OH non-containing (meth)acrylic ester and/or vinyl aromatic compound, (b) one or more hydroxy functional (meth)acrylic ester, (c) one or more free radical-copolymerizable ionic and/or potentially ionic monomer, and, if necessary, (d) one or more free radical-copolymerizable monomer other than ingredients (a) to (c), and (B) one or more hydroxy functional polycarbonate polyol as an reactive diluent.

### Citation List

### Patent Literature

PTL 1: Japanese Patent No. 6249212

### Summary of Invention

### Technical Problem

An object of the present invention is to provide an aqueous resin composition capable of forming a coating film having high adhesion to a plastic substrate and having high water-resistant adhesion and fragrance resistance, a paint, and a plastic molded article coated with the paint.

### Solution to Problem

The inventors of the present invention have conducted elaborate studies to achieve the object described above and have found that a coating film having high adhesion to a plastic substrate and having high water-resistant adhesion and fragrance resistance can be obtained by using an aqueous resin composition containing a polycarbonate-modified acrylic resin that is a reaction product of a specific polycarbonate diol and an unsaturated monomer mixture containing specific unsaturated monomers as essential components, and an aqueous medium. This finding has led to completion of the invention.

Specifically, the present invention is directed to an aqueous resin composition containing a polycarbonate-modified acrylic resin that is a reaction product of a polycarbonate diol (A) made from 1,4-butanediol as an essential raw material and an unsaturated monomer mixture (B) containing methyl methacrylate, an unsaturated monomer (b1) having a hydroxy group, an unsaturated monomer (b2) having a carboxy group, and an unsaturated monomer (b3) having an alicyclic structure as essential components, and an aqueous medium, in which the ratio of the unsaturated monomer (b3) in the unsaturated monomer mixture (B) is in the range of 3 to 60% by mass, a ratio of the methyl methacrylate in the unsaturated monomer mixture (B) is in a range of 20 to 80% by mass, and a ratio of the unsaturated monomer (b1) in the unsaturated monomer mixture (B) is in a range of 1 to 50% by mass.

### Advantageous Effects of Invention

The aqueous resin composition of the present invention is useful for a paint in view of capable of forming a coating film having high adhesion to a plastic substrate and having high water-resistant adhesion and fragrance resistance, and the paint can be applied to various plastic molded articles. The polycarbonate-modified acrylic resin of the present invention is therefore suitable for paints to coat various articles, such as housings of electronic devices such as mobile phones, smart phones, tablet terminals, personal computers, digital cameras, and game consoles; housings of home appliances such as televisions, refrigerators, washing machines, and air conditioners; and interior materials of various vehicles such as automobiles and railroad vehicles. Description of Embodiments

An aqueous resin composition of the present invention contains a polycarbonate-modified acrylic resin that is a reaction product of a polycarbonate diol (A) made from 1,4-butanediol as an essential raw material and an unsaturated monomer mixture (B) containing methyl methacrylate, an unsaturated monomer (b1) having a hydroxy group, an unsaturated monomer (b2) having a carboxy group, and an unsaturated monomer (b3) having an alicyclic structure as essential components, and an aqueous medium, in which the ratio of the unsaturated monomer (b3) in the unsaturated monomer mixture (B) is in the range of 3 to 60% by mass, a ratio of the methyl methacrylate in the unsaturated monomer mixture (B) is in a range of 20 to 80% by mass, and a ratio of the unsaturated monomer (b1) in the unsaturated monomer mixture (B) is in a range of 1 to 50% by mass.

First of all, the polycarbonate diol (A) will be described. This polycarbonate diol (A) is a polycarbonate diol made from 1,4-butanediol as a raw material and is obtained, for example, by a reaction of 1,4-butanediol and other diol compounds with a carbonic acid ester or phosgene.

Examples of the other diol compounds include 1,3-propanediol, 1,2-propanediol, 2-methyl-1,3-propanediol, 2,2-dimethyl-1,3-propanediol, 2-butyl-2-ethyl-1,3-propanediol, 1,2-butanediol, 1,3-butanediol, 1,5-pentanediol, 2,4-pentanediol, 2-methyl-1,3-pentanediol, 3-methyl-1,5-pentanediol, 1,6-hexanediol, 1,5-hexanediol, and 2-ethyl-1,3-hexanediol. In view of higher fragrance resistance, 1,3-propanediol, 2-methyl-1,3-propanediol, and 1,6-hexanediol are preferable, and 1,6-hexanediol is more preferable. These diol compounds can be used alone or in combination of two or more.

The mass ratio of 1,4-butanediol to the other diol compounds is preferably in the range of 30/70 to 90/10 and preferably in the range of 50/50 to 90/10 in view of further improving the adhesion to a plastic substrate.

The number-average molecular weight of the polycarbonate diol (A) is preferably in the range of 300 to 5,000 and more preferably in the range of 700 to 3,000 in view of higher adhesion to a substrate and higher fragrance resistance.

The unsaturated monomer mixture (B) will now be described. The unsaturated monomer mixture (B) contains methyl methacrylate, an unsaturated monomer (b1) having a hydroxy group, an unsaturated monomer (b2) having a carboxy group, and an unsaturated monomer (b3) having an alicyclic structure as essential components, in which the ratio of the unsaturated monomer (b3) is in the range of 3 to 60% by mass.

Examples of the unsaturated monomer (b1) having a hydroxy group include 2-hydroxyethyl (meth)acrylate, 3-hydroxypropyl (meth)acrylate, 4-hydroxy-n-butyl (meth)acrylate, 2-hydroxypropyl (meth)acrylate, 2-hydroxy-n-butyl (meth)acrylate, 3-hydroxy-n-butyl (meth)acrylate, 1,4-cyclohexanedimethanol mono(meth)acrylate, glycerol mono(meth)acrylate, polyoxyethylene mono(meth)acrylate, polyoxypropylene mono(meth)acrylate, polyoxybutylene mono(meth)acrylate, 2-hydroxy-3-phenoxypropyl (meth)acrylate, 2-(meth)acryloyloxyethyl-2-hydroxyethylphthalate, and polycaprolactone-modified hydroxyethyl mono(meth)acrylate. Among these, 2-hydroxyethyl (meth)acrylate is preferable in view of enhanced appearance and higher water-resistant adhesion and fragrance resistance of the resulting coating film. These unsaturated monomers (b1) can be used alone or in combination of two or more.

In the present invention, "(meth)acrylic acid" refers to one or both of methacrylic acid and acrylic acid, "(meth)acrylate" refers to one or both of methacrylate and acrylate, and "(meth)acryloyl group" refers to one or both of methacryloyl group and acryloyl group.

Examples of the unsaturated monomer (b2) having a carboxy group include unsaturated monocarboxylic acids such as (meth)acrylic acid, crotonic acid, β-carboxyethyl (meth)acrylate, ω-carboxy-polycaprolactone mono(meth)acrylate, 2-(meth)acryloyloxyethyl succinate, and 2-(meth)acryloyloxyethyl hexahydrophthalate; and unsaturated dicarboxylic acids such as maleic acid, fumaric acid, and itaconic acid, or half-esters of these unsaturated dicarboxylic acids. Among these, (meth)acrylic acid is preferable in view of higher dispersibility in water. These unsaturated monomers (b2) can be used alone or in combination of two or more.

Examples of the unsaturated monomer (b3) having an alicyclic structure include cyclohexyl (meth)acrylate, 4-tert-butylcyclohexyl (meth)acrylate, isobornyl (meth)acrylate, dicyclopentanyl (meth)acrylate, dicyclopentenyloxyethyl (meth)acrylate, and 1,4-cyclohexanedimethanol mono(meth)acrylate. Cyclohexyl(meth)acrylate is more preferable in view of further improving the adhesion and the water-resistant adhesion. These unsaturated monomers (b3) can be used alone or in combination of two or more.

The unsaturated monomer mixture (B) contains methyl methacrylate, the unsaturated monomer (b1), the unsaturated monomer (b2), and the unsaturated monomer (b3) as essential components and may contain other unsaturated monomers (b4). Examples of the other unsaturated monomers (b4) include methyl acrylate, ethyl (meth)acrylate, n-propyl (meth)acrylate, isopropyl (meth)acrylate, n-butyl (meth)acrylate, isobutyl (meth)acrylate, t-butyl (meth)acrylate, n-pentyl (meth)acrylate, n-hexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, tridecyl (meth)acrylate, cetyl (meth)acrylate, stearyl (meth)acrylate, behenyl (meth)acrylate, benzyl (meth)acrylate; acrylamide, N,N-dimethyl (meth)acrylamide, (meth)acrylonitrile, 3-(meth)acryloyloxypropyltrimethoxysilane, N,N-dimethylaminoethyl (meth)acrylate, 2-(meth)acryloyloxyethyl acid phosphate, glycidyl (meth)acrylate, vinyl acetate, styrene, α-methylstyrene, p-methylstyrene, p-methoxystyrene, and diacrylate compounds such as ethylene glycol diacrylate. These unsaturated monomers can be used alone or in combination of two or more.

The ratio of the methyl methacrylate in the unsaturated monomer mixture (B) is in the range of 20 to 80% by mass and preferably in the range of 40 to 70% by mass in view of higher fragrance resistance of the resulting coating film.

The ratio of the unsaturated monomer (b1) in the unsaturated monomer mixture (B) is in the range of 1 to 50% by mass and preferably in the range of 10 to 40% by mass in view of higher fragrance resistance of the resulting coating film.

The ratio of the unsaturated monomer (b2) in the unsaturated monomer mixture (B) is preferably in the range of 1 to 10% by mass and more preferably in the range of 2 to 5% by mass in view of higher water-resistant adhesion of the resulting coating film.

The ratio of the unsaturated monomer (b3) in the unsaturated monomer mixture (B) is in the range of 3 to 60% by mass, preferably in the range of 5 to 40% by mass and more preferably in the range of 10 to 30% by mass in view of higher adhesion and water-resistant adhesion of the resulting coating film.

The polycarbonate-modified acrylic resin is produced preferably by radical polymerization of the unsaturated monomer mixture (B) in the presence of the polycarbonate diol (A) and a solvent, because this method is easy and convenient.

The radical polymerization is a method in which the monomers as raw materials are dissolved in a solvent and a polymerization reaction proceeds in the presence of a polymerization initiator. Examples of the solvent that can be used in this process include aromatic hydrocarbon compounds such as toluene and xylene; alicyclic hydrocarbon compounds such as cyclohexane, methylcyclohexane, and ethylcyclohexane; ketone compounds such as acetone, methyl ethyl ketone, methyl isobutyl ketone, and cyclohexanone; ester compounds such as ethyl acetate, n-butyl acetate, isobutyl acetate, and propylene glycol monomethyl ether acetate; alcohol compounds such as n-butanol, isopropyl alcohol, and cyclohexanol; glycol compounds such as ethylene glycol monobutyl ether, propylene glycol monomethyl ether, and diethylene glycol dimethyl ether; aliphatic hydrocarbon compounds such as heptane, hexane, octane, and mineral turpentine. Among these, it is preferable to use a water-miscible organic solvent because it can be used as it is as the aqueous medium contained in the aqueous resin composition of the present invention. These solvents can be used alone or in combination of two or more.

Examples of the polymerization initiator include organic peroxides such as ketone peroxide compounds such as cyclohexanone peroxide, 3,3,5-trimethylcyclohexanone peroxide, and methylcyclohexanone peroxide; peroxyketal compounds such as 1,1-bis(tert-butylperoxy)-3,3,5-trimethylcyclohexane, 1,1-bis(tert-butylperoxy)cyclohexane, n-butyl-4,4-bis(tert-butylperoxy) valerate, 2,2-bis(4,4-ditert-butylperoxycyclohexyl)propane, 2,2-bis(4,4-ditert-amylperoxycyclohexyl)propane, 2,2-bis(4,4-ditert-hexylperoxycyclohexyl)propane, 2,2-bis(4,4-ditert-octylperoxycyclohexyl)propane, and 2,2-bis(4,4-dicumylperoxycyclohexyl)propane; hydroperoxide compounds such as cumene hydroperoxide and 2,5-dimethylhexane-2,5-dihydroperoxide; dialkyl peroxide compounds such as 1,3-bis(tert-butylperoxy-m-isopropyl)benzene, 2,5-dimethyl-2,5-di(tert-butylperoxy)hexane, diisopropylbenzene peroxide, tert-butylcumyl peroxide, and ditert-butyl peroxide; diacyl peroxide compounds such as decanoyl peroxide, lauroyl peroxide, benzoyl peroxide, and 2,4-dichlorobenzoyl peroxide; peroxycarbonate compounds such as bis(tert-butylcyclohexyl) peroxydicarbonate; and peroxyester compounds such as tert-butylperoxy-2-ethylhexanoate, tert-amylperoxy-2-ethylhexanoate, tert-butylperoxy benzoate, and 2,5-dimethyl-2,5-di(benzoylperoxy)hexane, and azo compounds such as 2,2'-azobisisobutyronitrile, 2,2'-azobis(2-methyl)butyronitrile, and 1,1'-azobis(cyclohexane-1-carbonitrile).

The mass ratio [(A)/(B)] of the polycarbonate diol (A) to the unsaturated monomer mixture (B) is preferably in the range of 2/100 to 60/100, preferably in the range of 3/100 to 50/100, and further preferably in the range of 5/100 to 30/100 in view of further improving the water-resistant adhesion, the chemical resistance, and the fragrance resistance of the resulting coating film.

The hydroxy value of the polycarbonate-modified acrylic resin is preferably in the range of 20 to 150 mg KOH/g and more preferably in the range of 60 to 150 mg KOH/g, in view of further improving the fragrance resistance of the resulting coating film.

The acid value of the polycarbonate-modified acrylic resin is preferably in the range of 5 to 60 mg KOH/g and more preferably in the range of 10 to 40 mg KOH/g, in view of further improving the storage stability of the aqueous resin composition and the fragrance resistance of the resulting coating film.

The weight-average molecular weight (Mw) of the polycarbonate-modified acrylic resin is preferably in the range of 2,000 to 50,000 and more preferably in the range of 4,000 to 30,000, in view of further improving the water-resistant adhesion and the fragrance resistance of the resulting coating film.

The average molecular weight in the present invention is a value in terms of polystyrene based on gel permeation chromatography (hereinafter abbreviated as "GPC") measurement.

Examples of the aqueous medium include water, hydrophilic organic solvents, and mixtures thereof. Preferable examples of the hydrophilic organic solvents are water-miscible organic solvents that mix with water without separation. Among those, an organic solvent having a solubility in water (the grams of the organic solvent dissolved in 100 g of water) of 3 g or more at 25°C is preferable. Examples of the water-miscible organic solvents include alcohol solvents such as methanol, ethanol, propanol, butanol, 3-methoxy butanol, and 3-methyl-3-methoxy butanol; ketone solvents such as acetone and methyl ethyl ketone; and glycol ether solvents such as ethylene glycol monomethyl ether, ethylene glycol dimethyl ether, ethylene glycol monoethyl ether, ethylene glycol diethyl ether, ethylene glycol monopropyl ether, ethylene glycol monoisopropyl ether, monobutyl ether, diethylene glycol monomethyl ether, diethylene glycol dimethyl ether, diethylene glycol monoethyl ether, diethylene glycol diethyl ether, diethylene glycol monoisopropyl ether, diethylene glycol monobutyl ether, triethylene glycol monomethyl ether, triethylene glycol dimethyl ether, propylene glycol monomethyl ether, propylene glycol dimethyl ether, propylene glycol monopropyl ether, propylene glycol monobutyl ether, dipropylene glycol monomethyl ether, and dipropylene glycol dimethyl ether. These water-miscible organic solvents may be used alone or may be used in combination of two or more.

In the aqueous resin composition of the present invention containing a polycarbonate-modified acrylic resin and an aqueous medium, the polycarbonate-modified acrylic resin obtained by the method described above is preferably dissolved or dispersed in the aqueous medium, and a dispersion is more preferable.

The polycarbonate-modified acrylic resin is dissolved or dispersed in the aqueous medium preferably by a method in which the acid groups of the polycarbonate-modified acrylic resin are neutralized by a basic compound and mixed with the aqueous medium.

Examples of the basic compound include organic amines such as methylamine, dimethylamine, trimethylamine, ethylamine, diethylamine, triethylamine, butylamine, dibutylamine, tributylamine, monoalkanolamines such as N,N-dimethylethanolamine and 2-aminoethanol, diethanolamine, diisopropanolamine, and dibutanolamine; inorganic basic compounds such as ammonia, sodium hydroxide, and potassium hydroxide; quaternary ammonium hydroxides such as tetramethylammonium hydroxide, tetra-n-butylammonium hydroxide, and trimethylbenzylammonium hydroxide. Among these, it is preferable to use organic amines and ammonia (or ammonia water). These basic compounds can be used alone or in combination of two or more.

The basic compound is preferably used in such an amount that the neutralization rate of the carboxy groups of the polycarbonate-modified acrylic resin is in the range of 50-100%, in view of further improving the storage stability of the aqueous resin composition.

The paint of the present invention contains the aqueous resin composition of the present invention and preferably contains a curing agent in view of further improving the physical properties of the resulting coating film.

Examples of the curing agent include polyisocyanate compounds, amino resins, epoxy compounds, oxazoline compounds, and carbodiimide compounds. Polyisocyanate compounds are preferable in view of further improving the water-resistant adhesion and the fragrance resistance of the resulting coating film. The curing agents may be used alone or in combination of two or more.

Examples of the polyisocyanate compounds include aromatic diisocyanate compounds such as tolylene diisocyanate, diphenylmethane diisocyanate, m-xylene diisocyanate, m-phenylenebis(dimethylmethylene) diisocyanate; and aliphatic or alicyclic diisocyanate compounds such as hexamethylene diisocyanate, lysine diisocyanate, 1,3-bis(isocyanatomethyl)cyclohexane, 2-methyl-1,3-diisocyanatocyclohexane, 2-methyl-1,5-diisocyanatocyclohexane, 4,4'-dicyclohexylmethane diisocyanate, and isophorone diisocyanate.

Other examples of the polyisocyanate compounds that can be used include prepolymers having an isocyanate group obtained by an addition reaction of the above diisocyanate compounds with polyhydric alcohols; compounds having an isocyanurate ring obtained by cyclotrimerization of the above diisocyanate compounds; polyisocyanate compounds having a urea bond or a burette bond obtained by a reaction of the above diisocyanate compounds with water; homopolymers of acrylic monomers having an isocyanate group, such as 2-isocyanatoethyl (meth)acrylate, 3-isopropenyl-α,α-dimethylbenzyl isocyanate, and (meth)acryloyl isocyanate; copolymers having an isocyanate group obtained by copolymerization of the above acrylic monomers having an isocyanate group with a monomer such as another acrylic monomer, a vinyl ester compound, a vinyl ether compound, an aromatic vinyl monomer, and a fluoroolefin.

The polyisocyanate compounds are preferably water-dispersible polyisocyanates obtained by modifying the polyisocyanate compounds described above, because when they are blended with the aqueous resin composition of the present invention, the mixture has excellent stability and high curing ability with a high degree of freedom in pot life.

The polyisocyanate compounds can be used alone or in combination of two or more.

The polyisocyanate compound is preferably blended in such an amount that the equivalent ratio of the isocyanate groups in the polyisocyanate compound to the hydroxy groups in the polycarbonate-modified acrylic resin (isocyanate groups/hydroxy groups) is in the range of 0.5 to 2.0 and more preferably in the range of 0.8 to 1.5, in view of forming a coating film having high strength.

The urethane-forming reaction described above may be carried out in the presence of a urethane-forming catalyst in order to accelerate the progress of the reaction. Examples of the urethane-forming catalyst include amine compounds such as triethylamine, organotin compounds such as dibutyltin dioctate, dibutyltin dilaurate, dioctyltin dilaurate, octyltin trilaurate, dioctyltin dineodecanate, dibutyltin diacetate, dioctyltin diacetate, and tin dioctylate, and organometallic compounds such as zinc octylate (zinc 2-ethylhexanoate).

The paint of the present invention contains the aqueous resin composition of the present invention and the curing agent and may be blended with other additives such as a defoaming agent, a viscosity modifier, a light stabilizer, a weathering stabilizer, a heat stabilizer, a UV absorber, an antioxidant, a leveling agent, and a pigment dispersant. Pigments such as titanium dioxide, calcium carbonate, aluminum powder, copper powder, mica powder, iron oxide, carbon black, phthalocyanine blue, toluidine red, perylene, quinacridone, and benzidine yellow can also be used.

The paint of the present invention is suitable as a paint to coat various plastic molded articles because of its high adhesion to a plastic substrate. Examples of the plastic molded articles that can be coated with the paint of the present invention include housings of electronic devices such as mobile phones, smart phones, tablet terminals, personal computers, digital cameras, and game consoles; housings of home appliances such as televisions, refrigerators, washing machines, and air conditioners; and interior materials of various vehicles such as automobiles and railroad vehicles.

The paint of the present invention can be applied, for example, by spraying, an applicator, a bar coater, a gravure coater, a roll coater, a comma coater, a knife coater, an air knife coater, a curtain coater, a kiss coater, a shower coater, a wheeler coater, a spin coater, dipping, or screen printing. After application, the paint is formed into a coating film, for example, by drying in the range of room temperature to 120°C.

### [EXAMPLES]

The present invention will be described in more detail below with specific examples. The hydroxy value of the polycarbonate-modified acrylic resin of the present invention was determined in accordance with the JIS test method K 0070-1992. The particle size was measured using Nanotrac UPA-EX150 manufactured by NIKKISO CO, LTD. The average molecular weight was measured under the following conditions of GPC measurement.

### [Conditions of GPC Measurement]

Measuring system: High-speed GPC system ("HLC-8220GPC" manufactured by Tosoh Corporation)
Column: The following columns manufactured by Tosoh Corporation were connected in series.
   "TSKgel G5000" (7.8 mm I.D. x 30 cm) x 1
   "TSKgel G4000" (7.8mm I.D. x 30 cm) x 1
   "TSKgel G3000" (7.8 mm I.D. x 30 cm) x 1
   "TSKgel G2000" (7.8mm I.D. x 30 cm) x 1
Detector: RI (differential refractometer)
Column temperature: 40°C
Eluent: Tetrahydrofuran (THF)
Flow rate: 1.0 mL/min
Injection volume: 100 µL (tetrahydrofuran solution having a sample concentration of 4 mg/mL)
Standard sample: A calibration curve was prepared using the following monodisperse polystyrene.

### (Monodisperse Polystyrene)

"TSKgel Standard polystyrene A-500" manufactured by Tosoh Corporation
"TSKgel Standard polystyrene A-1000" manufactured by Tosoh Corporation
"TSKgel Standard polystyrene A-2500" manufactured by Tosoh Corporation
"TSKgel Standard polystyrene A-5000" manufactured by Tosoh Corporation
"TSKgel Standard polystyrene F-1" manufactured by Tosoh Corporation
"TSKgel Standard polystyrene F-2" manufactured by Tosoh Corporation
"TSKgel Standard polystyrene F-4" manufactured by Tosoh Corporation
"TSKgel Standard polystyrene F-10" manufactured by Tosoh Corporation
"TSKgel Standard polystyrene F-20" manufactured by Tosoh Corporation
"TSKgel Standard polystyrene F-40" manufactured by Tosoh Corporation
"TSKgel Standard polystyrene F-80" manufactured by Tosoh Corporation
"TSKgel Standard polystyrene F-128" manufactured by Tosoh Corporation
"TSKgel Standard polystyrene F-288" manufactured by Tosoh Corporation
"TSKgel Standard polystyrene F-550" manufactured by Tosoh Corporation

### (Example 1: Synthesis of Aqueous Resin Composition (1))

To a flask equipped with a condenser, a thermometer, a dropping funnel, and a stirrer, 60 parts by mass of polycarbonate diol ("DURANOL G4672" manufactured by Asahi Kasei Chemicals Corporation, number-average molecular weight 2000; hereinafter abbreviated as "polycarbonate diol (A-1)") made from 1,4-butanediol as an essential raw material and 144.7 parts by mass of diethylene glycol dimethyl ether were added. The temperature in the flask was raised to 135°C. Then, a mixture of 45 parts by mass of cyclohexyl methacrylate, 259.0 parts by mass of methyl methacrylate, 9.5 parts by mass of butyl acrylate, 125.2 parts by mass of 2-hydroxyethyl methacrylate, and 17.5 parts by mass of tert-butylperoxy-2-ethyl hexanoate was added dropwise over three hours. Then, a mixture of 15 parts by mass of cyclohexyl methacrylate, 86.3 parts by mass of methyl methacrylate, 4.0 parts by mass of butyl acrylate, 41.8 parts by mass of 2-hydroxyethyl methacrylate, 15.4 parts by mass of acrylic acid, and 15.4 parts by mass of tert-butylperoxy-2-ethyl hexanoate was added dropwise over one hour. After completion of the addition, the mixture was stirred at the same temperature for two hours and then cooled to 95°C. After 15.3 parts by mass of dimethylethanolamine was added, the mixture was stirred for 30 minutes. In addition, the mixture was dispersed in water by adding 686.9 parts by mass of ion-exchange water, resulting in an aqueous resin composition (1). The aqueous resin composition (1) had a non-volatile content of 46.3% and a weight-average molecular weight (Mw) of 12,000.

### (Example 2: Synthesis of Aqueous Resin Composition (2))

To a flask equipped with a condenser, a thermometer, a dropping funnel, and a stirrer, 60 parts by mass of polycarbonate diol (A-1) and 144.7 parts by mass of diethylene glycol dimethyl ether were added, and the temperature in the flask was raised to 135°C. Then, a mixture of 90 parts by mass of cyclohexyl methacrylate, 220.7 parts by mass of methyl methacrylate, 2.7 parts by mass of butyl acrylate, 125.1 parts by mass of 2-hydroxyethyl methacrylate, and 17.5 parts by mass of tert-butylperoxy-2-ethyl hexanoate was added dropwise over three hours. Then, a mixture of 30 parts by mass of cyclohexyl methacrylate, 73.6 parts by mass of methyl methacrylate, 0.9 parts by mass of butyl acrylate, 41.7 parts by mass of 2-hydroxyethyl methacrylate, 15.6 parts by mass of acrylic acid, and 15.4 parts by mass of tert-butylperoxy-2-ethyl hexanoate was added dropwise over one hour. After completion of the addition, the mixture was stirred at the same temperature for two hours and then cooled to 95°C. After 15.3 parts by mass of dimethylethanolamine was added, the mixture was stirred for 30 minutes. In addition, the mixture was dispersed in water by adding 686.9 parts by mass of ion-exchange water, resulting in an aqueous resin composition (2). The aqueous resin composition (2) had a non-volatile content of 46.2% and a weight-average molecular weight (Mw) of 13,000.

### (Example 3: Synthesis of Aqueous Resin Composition (3))

To a flask equipped with a condenser, a thermometer, a dropping funnel, and a stirrer, 60 parts by mass of polycarbonate diol ("DURANOL T4671" manufactured by Asahi Kasei Chemicals Corporation, number-average molecular weight 1000; hereinafter abbreviated as "polycarbonate diol (A-2)") made from 1,4-butanediol as an essential raw material and 144.7 parts by mass of diethylene glycol dimethyl ether were added. The temperature in the flask was raised to 135°C. Then, a mixture of 90 parts by mass of cyclohexyl methacrylate, 220.7 parts by mass of methyl methacrylate, 2.7 parts by mass of butyl acrylate, 125.1 parts by mass of 2-hydroxyethyl methacrylate, and 17.5 parts by mass of tert-butylperoxy-2-ethyl hexanoate was added dropwise over three hours. Then, a mixture of 30 parts by mass of cyclohexyl methacrylate, 73.6 parts by mass of methyl methacrylate, 0.9 parts by mass of butyl acrylate, 41.7 parts by mass of 2-hydroxyethyl methacrylate, 15.6 parts by mass of acrylic acid, and 15.4 parts by mass of tert-butylperoxy-2-ethyl hexanoate was added dropwise over one hour. After completion of the addition, the mixture was stirred at the same temperature for two hours and then cooled to 95°C. After 15.3 parts by mass of dimethylethanolamine was added, the mixture was stirred for 30 minutes. In addition, the mixture was dispersed in water by adding 686.9 parts by mass of ion-exchange water, resulting in an aqueous resin composition (3). The aqueous resin composition (3) had a non-volatile content of 46.0% and a weight-average molecular weight (Mw) of 13,000.

### (Example 4: Synthesis of Aqueous Resin Composition (4))

To a flask equipped with a condenser, a thermometer, a dropping funnel, and a stirrer, 60 parts by mass of polycarbonate diol ("DURANOL G3452" manufactured by Asahi Kasei Chemicals Corporation, number-average molecular weight 2000; hereinafter abbreviated as "polycarbonate diol (A-3)") made from 1,4-butanediol as an essential raw material and 144.7 parts by mass of diethylene glycol dimethyl ether were added. The temperature in the flask was raised to 135°C. Then, a mixture of 90 parts by mass of cyclohexyl methacrylate, 220.7 parts by mass of methyl methacrylate, 2.7 parts by mass of butyl acrylate, 125.1 parts by mass of 2-hydroxyethyl methacrylate, and 17.5 parts by mass of tert-butylperoxy-2-ethyl hexanoate was added dropwise over three hours. Then, a mixture of 30 parts by mass of cyclohexyl methacrylate, 73.6 parts by mass of methyl methacrylate, 0.9 parts by mass of butyl acrylate, 41.7 parts by mass of 2-hydroxyethyl methacrylate, 15.6 parts by mass of acrylic acid, and 15.4 parts by mass of tert-butylperoxy-2-ethyl hexanoate was added dropwise over one hour. After completion of the addition, the mixture was stirred at the same temperature for two hours and then cooled to 95°C. After 15.3 parts by mass of dimethylethanolamine was added, the mixture was stirred for 30 minutes. In addition, the mixture was dispersed in water by adding 686.9 parts by mass of ion-exchange water, resulting in an aqueous resin composition (4). The aqueous resin composition (4) had a non-volatile content of 45.9% and a weight-average molecular weight (Mw) of 12,000.

### (Example 5: Synthesis of Aqueous Resin Composition (5))

To a flask equipped with a condenser, a thermometer, a dropping funnel, and a stirrer, 60 parts by mass of polycarbonate diol (A-1) and 144.7 parts by mass of diethylene glycol dimethyl ether were added, and the temperature in the flask was raised to 135°C. Then, a mixture of 90 parts by mass of cyclohexyl methacrylate, 200.3 parts by mass of methyl methacrylate, 1.8 parts by mass of butyl acrylate, 146.3 parts by mass of 2-hydroxyethyl methacrylate, and 17.5 parts by mass of tert-butylperoxy-2-ethyl hexanoate was added dropwise over three hours. Then, a mixture of 30 parts by mass of cyclohexyl methacrylate, 66.8 parts by mass of methyl methacrylate, 0.6 parts by mass of butyl acrylate, 48.8 parts by mass of 2-hydroxyethyl methacrylate, 15.6 parts by mass of acrylic acid, and 15.4 parts by mass of tert-butylperoxy-2-ethyl hexanoate was added dropwise over one hour. After completion of the addition, the mixture was stirred at the same temperature for two hours and then cooled to 95°C. After 15.3 parts by mass of dimethylethanolamine was added, the mixture was stirred for 30 minutes. In addition, the mixture was dispersed in water by adding 686.9 parts by mass of ion-exchange water, resulting in an aqueous resin composition (5). The aqueous resin composition (5) had a non-volatile content of 44.5% and a weight-average molecular weight (Mw) of 13,000.

### (Example 6: Synthesis of Aqueous Resin Composition (6))

To a flask equipped with a condenser, a thermometer, a dropping funnel, and a stirrer, 120 parts by mass of polycarbonate diol (A-1) and 159.5 parts by mass of diethylene glycol dimethyl ether were added, and the temperature in the flask was raised to 135°C. Then, a mixture of 90 parts by mass of cyclohexyl methacrylate, 220.7 parts by mass of methyl methacrylate, 2.7 parts by mass of butyl acrylate, 125.1 parts by mass of 2-hydroxyethyl methacrylate, and 17.5 parts by mass of tert-butylperoxy-2-ethyl hexanoate was added dropwise over three hours. Then, a mixture of 30 parts by mass of cyclohexyl methacrylate, 73.6 parts by mass of methyl methacrylate, 0.9 parts by mass of butyl acrylate, 41.7 parts by mass of 2-hydroxyethyl methacrylate, 15.6 parts by mass of acrylic acid, and 15.4 parts by mass of tert-butylperoxy-2-ethyl hexanoate was added dropwise over one hour. After completion of the addition, the mixture was stirred at the same temperature for two hours and then cooled to 95°C. After 15.3 parts by mass of dimethylethanolamine was added, the mixture was stirred for 30 minutes. In addition, the mixture was dispersed in water by adding 746.9 parts by mass of ion-exchange water, resulting in an aqueous resin composition (5). The aqueous resin composition (5) had a non-volatile content of 44.3% and a weight-average molecular weight (Mw) of 12,000.

### (Comparative Example 1: Synthesis of Aqueous Resin Composition (R1))

To a flask equipped with a condenser, a thermometer, a dropping funnel, and a stirrer, 30 parts by mass of polycarbonate diol (A-1) and 137.2 parts by mass of diethylene glycol dimethyl ether were added, and the temperature in the flask was raised to 135°C. Then, a mixture of 296.7 parts by mass of methyl methacrylate, 16.5 parts by mass of butyl acrylate, 125.2 parts by mass of 2-hydroxyethyl methacrylate, and 17.5 parts by mass of tert-butylperoxy-2-ethyl hexanoate was added dropwise over three hours. Then, a mixture of 98.9 parts by mass of methyl methacrylate, 5.5 parts by mass of butyl acrylate, 41.8 parts by mass of 2-hydroxyethyl methacrylate, 15.4 parts by mass of acrylic acid, and 15.4 parts by mass of tert-butylperoxy-2-ethyl hexanoate was added dropwise over one hour. After completion of the addition, the mixture was stirred at the same temperature for two hours and then cooled to 95°C. After 15.3 parts by mass of dimethylethanolamine was added, the mixture was stirred for 30 minutes. In addition, the mixture was dispersed in water by adding 656.2 parts by mass of ion-exchange water, resulting in an aqueous resin composition (R1). The aqueous resin composition (R1) had a non-volatile content of 43.9% and a weight-average molecular weight (Mw) of 12,000.

### (Comparative Example 2: Synthesis of Aqueous Resin Composition (R2))

To a flask equipped with a condenser, a thermometer, a dropping funnel, and a stirrer, 30 parts by mass of polycarbonate diol (A-3) and 137.2 parts by mass of diethylene glycol dimethyl ether were added, and the temperature in the flask was raised to 135°C. Then, a mixture of 296.6 parts by mass of methyl methacrylate, 16.7 parts by mass of butyl acrylate, 125.1 parts by mass of 2-hydroxyethyl methacrylate, and 17.5 parts by mass of tert-butylperoxy-2-ethyl hexanoate was added dropwise over three hours. Then, a mixture of 98.9 parts by mass of methyl methacrylate, 5.6 parts by mass of butyl acrylate, 41.7 parts by mass of 2-hydroxyethyl methacrylate, 15.6 parts by mass of acrylic acid, and 15.4 parts by mass of tert-butylperoxy-2-ethyl hexanoate was added dropwise over one hour. After completion of the addition, the mixture was stirred at the same temperature for two hours and then cooled to 95°C. After 15.3 parts by mass of dimethylethanolamine was added, the mixture was stirred for 30 minutes. In addition, the mixture was dispersed in water by adding 656.2 parts by mass of ion-exchange water, resulting in an aqueous resin composition (R2). The aqueous resin composition (R2) had a non-volatile content of 43.9% and a weight-average molecular weight (Mw) of 12,000.

### (Comparative Example 3: Synthesis of Aqueous Resin Composition (R3))

To a flask equipped with a condenser, a thermometer, a dropping funnel, and a stirrer, 60 parts by mass of polycarbonate diol ("DURANOL T5652" manufactured by Asahi Kasei Chemicals Corporation, number-average molecular weight 2000; hereinafter abbreviated as "polycarbonate diol (RA-1)") and 144.7 parts by mass of diethylene glycol dimethyl ether were added. The temperature in the flask was raised to 135°C. Then, a mixture of 90 parts by mass of cyclohexyl methacrylate, 220.7 parts by mass of methyl methacrylate, 2.7 parts by mass of butyl acrylate, 125.1 parts by mass of 2-hydroxyethyl methacrylate, and 17.5 parts by mass of tert-butylperoxy-2-ethyl hexanoate was added dropwise over three hours. Then, a mixture of 30 parts by mass of cyclohexyl methacrylate, 73.6 parts by mass of methyl methacrylate, 0.9 parts by mass of butyl acrylate, 41.7 parts by mass of 2-hydroxyethyl methacrylate, 15.6 parts by mass of acrylic acid, and 15.4 parts by mass of tert-butylperoxy-2-ethyl hexanoate was added dropwise over one hour. After completion of the addition, the mixture was stirred at the same temperature for two hours and then cooled to 95°C. After 15.3 parts by mass of dimethylethanolamine was added, the mixture was stirred for 30 minutes. In addition, the mixture was dispersed in water by adding 686.9 parts by mass of ion-exchange water, resulting in an aqueous resin composition (R3). The aqueous resin composition (R4) had a non-volatile content of 45.1% and a weight-average molecular weight (Mw) of 13,000.

### (Comparative Example 5: Synthesis of Aqueous Resin Composition (R4))

To a flask equipped with a condenser, a thermometer, a dropping funnel, and a stirrer, 60 parts by mass of polycarbonate diol ("DURANOL T5650J" manufactured by Asahi Kasei Chemicals Corporation, number-average molecular weight 800; hereinafter abbreviated as "polycarbonate diol (RA-2)") and 144.7 parts by mass of diethylene glycol dimethyl ether were added. The temperature in the flask was raised to 135°C. Then, a mixture of 90 parts by mass of cyclohexyl methacrylate, 220.7 parts by mass of methyl methacrylate, 2.7 parts by mass of butyl acrylate, 125.1 parts by mass of 2-hydroxyethyl methacrylate, and 17.5 parts by mass of tert-butylperoxy-2-ethyl hexanoate was added dropwise over three hours. Then, a mixture of 30 parts by mass of cyclohexyl methacrylate, 73.6 parts by mass of methyl methacrylate, 0.9 parts by mass of butyl acrylate, 41.7 parts by mass of 2-hydroxyethyl methacrylate, 15.6 parts by mass of acrylic acid, and 15.4 parts by mass of tert-butylperoxy-2-ethyl hexanoate was added dropwise over one hour. After completion of the addition, the mixture was stirred at the same temperature for two hours and then cooled to 95°C. After 15.3 parts by mass of dimethylethanolamine was added, the mixture was stirred for 30 minutes. In addition, the mixture was dispersed in water by adding 686.9 parts by mass of ion-exchange water, resulting in an aqueous resin composition (R5). The aqueous resin composition (R5) had a non-volatile content of 45.6% and a weight-average molecular weight (Mw) of 12,000.

The compositions and the evaluation results of the aqueous resin compositions (1) to (6) obtained as described above are listed in Table 1.

**[Table 1]**

| Table 1 | | | | Example 1 | Example 2 | Example 3 | Example 4 | Example 5 | Example 6 |
|---|---|---|---|---|---|---|---|---|---|
| Aqueous resin composition | | | | (1) | (2) | (3) | (4) | (5) | (6) |
| Composition (parts by mass) | Polycarbonate diol | | (A-1) | 10 | 10 | | | 10 | 20 |
| | | | (A-2) | | | 10 | | | |
| | | | (A-3) | | | | 10 | | |
| | Unsaturated monomer mixture | MMA | | 57.5 | 49.0 | 49.0 | 49.0 | 44.5 | 49.0 |
| | | Unsaturated monomer (b1) | HEMA | 27.8 | 27.8 | 27.8 | 27.8 | 32.5 | 27.8 |
| | | Unsaturated monomer (b2) | AA | 2.6 | 2.6 | 2.6 | 2.6 | 2.6 | 2.6 |
| | | Unsaturated monomer (b3) | CHMA | 10.0 | 20.0 | 20.0 | 20.0 | 20.0 | 20.0 |
| | | Unsaturated monomer (b4) | BA | 2.1 | 0.6 | 0.6 | 0.6 | 0.4 | 0.6 |
| | | Mass ratio (%) of unsaturated monomer (b3) | | 10.0 | 20.0 | 20.0 | 20.0 | 20.0 | 20.0 |
| | Polycarbonate diol/unsaturated monomer mixture (mass ratio) | | | 10/100 | 10/100 | 10/100 | 10/100 | 10/100 | 20/100 |
| | Weight-average molecular weight | | | 12,000 | 13,000 | 13, 000 | 12,000 | 13,000 | 13,000 |

The abbreviations in Table 1 and Table 2 are as follows.
MMA: Methyl methacrylate
HEMA: 2-Hydroxyethyl methacrylate

AA: Acrylic acid
CHMA: Cyclohexyl methacrylate
BA: Butyl acrylate

The compositions of the comparative aqueous resin compositions (R1) to (R4) obtained as described above are listed in Table 2.

**[Table 2]**

| Table 2 | | | | Comparative Example 1 | Comparative Example 2 | Comparative Example 3 | Comparative Example 4 |
|---|---|---|---|---|---|---|---|
| Aqueous resin composition | | | | (R1) | (R2) | (R4) | (R5) |
| Composition (parts by mass) | Polycarbonate diol | | (A-1) | 5 | | | |
| | | | (A-3) | | 5 | | |
| | | | (RA-1) | | | 10 | |
| | | | (RA-2) | | | | 10 |
| | Unsaturated monomer mixture | MMA | | 65.9 | 65.9 | 49.0 | 49.0 |
| | | Unsaturated monomer (b1) | HEMA | 27.8 | 27.8 | 27.8 | 27.8 |
| | | Unsaturated monomer (b2) | AA | 2.6 | 2.6 | 2.6 | 2.6 |
| | | Unsaturated monomer (b3) | CHMA | | | 20.0 | 20.0 |
| | | Unsaturated monomer (b4) | BA | 3.7 | 3.7 | 0.6 | 0.6 |
| | | Mass ratio (%) of unsaturated monomer (b3) | | 0 | 0 | 20.0 | 20.0 |
| | Polycarbonate diol/unsaturated monomer mixture (mass ratio) | | | 5/100 | 5/100 | 10/100 | 10/100 |
| | Weight-average molecular weight | | | 12,000 | 12,000 | 13,000 | 13,000 |

### (Examples 7 to 12: Preparation and Evaluation of Paints (1) to (6)

### [Preparation of Aqueous Paint]

The aqueous resin composition obtained as described above and a curing agent ("BURNOCK DNW-5500" manufactured by DIC Corporation, water-dispersible polyisocyanate) were blended. The hydroxy equivalent weight in the polycarbonate-modified acrylic resin and the isocyanate equivalent weight in the curing agent were set to be 1.0:1.2. Then, an aqueous paint was prepared by diluting the mixture with ion-exchange water so that the viscosity determined by "Viscosity Cup NK-2" manufactured by ANEST IWATA Corporation indicated approximately 13 seconds (23°C).

### [Preparation of Cured Coating Film X for Evaluation]

The aqueous paint obtained as described above was applied to an ABS (acrylonitrile-butadiene-styrene copolymer) substrate (50 mm x 70 mm x 1 mm) by spraying to a film thickness of approximately 25 um after drying, and then heated and dried in a dryer at 80°C for 30 minutes, followed by drying at 25°C for seven days to produce a cured coating film X for evaluation.

### [Preparation of Cured Coating Film Y for Evaluation]

The aqueous paint obtained as described above was applied to a PC (polycarbonate) substrate (50 mm x 70 mm x 1 mm) by spraying to a film thickness of approximately 25 um after drying, and then heated and dried in a dryer at 80°C for 30 minutes, followed by drying at 25°C for seven days to produce a cured coating film Y for evaluation.

### [Adhesion Evaluation]

Using a cutter, cuts having a width of 1 mm were made in the cured coating film for evaluation obtained as described above to make a grid pattern of 100 squares. Then, an adhesive tape was affixed to cover the entire grid pattern and peeled off quickly. This operation was repeated four times. The adhesion was evaluated by the following criteria, based on the number of squares of the grid pattern kept adhering.
A: 100
B: 99 to 90
C: 89 to 70
D: 69 or less

### [Evaluation of Water-Resistant Adhesion]

After the cured coating film for evaluation obtained as described above was immersed in water at 40°C for 240 hours, the same operation as in the adhesion evaluation was performed, and the water-resistant adhesion was evaluated by the following criteria.
A: 100
B: 99 to 90
C: 89 to 70
D: 69 or less

### [Evaluation of Fragrance Resistance]

A 15 mm x 15 mm piece cut from an air freshener (Little Trees Air Freshener "Royal Pine") was placed on the cured coating film X for evaluation obtained as described above, and dried at 74°C for four hours while being loaded with a weight of 500 g. Subsequently, the air freshener was removed by hand, and the appearance of the cured coating film was visually observed, and the fragrance resistance was evaluated by the following criteria.
5: No traces or some slight traces
4: Slight traces all over
3: Traces found
2: Air freshener removable but substrate exposed
1: Air freshener sticky and unremovable from substrate

### (Comparative Examples 5 to 8: Preparation and Evaluation of Aqueous Paints (R1) to (R4))

An aqueous paint was prepared by the same operation as in Examples and then a coating film for evaluation was prepared and evaluated.

The evaluation results of the aqueous paints (1) to (6) obtained as described above are listed in Table 3.

**[Table 3]**

| Table 3 | | Example 7 | Example 8 | Example 9 | Example 10 | Example 11 | Example 12 |
|---|---|---|---|---|---|---|---|
| Aqueous paint | | (1) | (2) | (3) | (4) | (5) | (6) |
| Evaluation | Adhesion (ABS substrate) | A | A | A | A | A | A |
| | Adhesion (PC substrate) | A | A | A | A | A | A |
| | Water-resistant adhesion (ABS substrate) | A | A | A | A | A | A |
| | Water-resistant adhesion (PC substrate) | A | A | A | B | A | A |
| | Fragrance resistance | 5 | 5 | 5 | 5 | 5 | 5 |

The evaluation results of the paints (R1) to (R4) obtained above are listed in Table 4.

**[Table 4]**

| Table 4 | | Comparative Example 5 | Comparative Example 6 | Comparative Example 7 | Comparative Example 8 |
|---|---|---|---|---|---|
| Aqueous paint | | (R1) | (R2) | (R3) | (R4) |
| Evaluation | Adhesion (ABS substrate) | D | D | A | A |
| | Adhesion (PC substrate) | D | D | B | B |
| | Water-resistant adhesion (ABS substrate) | D | D | B | B |
| | Water-resistant adhesion (PC substrate) | D | D | B | B |
| | Fragrance resistance | 4 | 4 | 2 | 2 |

The results demonstrated that the cured coating films obtained in Examples 1 to 6 that are the aqueous resin compositions of the present invention have high adhesion, water-resistant adhesion, and fragrance resistance (Examples 7 to 12).

On the other hand, Comparative Examples 1 and 2, which are examples in which the unsaturated monomer mixture (B) does not contain the unsaturated monomer (b3) having an alicyclic structure, demonstrated that the adhesion and the water-resistant adhesion of the resulting coating films were inferior (Comparative Examples 5 and 6).

Comparative Examples 3 and 4, which are examples in which a polycarbonate diol made from 1,4-butanediol as an essential raw material is not used, demonstrated that the fragrance resistance of the resulting cured coating film was inferior (Comparative Examples 7 and 8).

## Claims

1. An aqueous resin composition comprising:
a polycarbonate-modified acrylic resin that is a reaction product of a polycarbonate diol (A) made from 1,4-butanediol as an essential raw material and an unsaturated monomer mixture (B) containing methyl methacrylate, an unsaturated monomer (b1) having a hydroxy group, an unsaturated monomer (b2) having a carboxy group, and an unsaturated monomer (b3) having an alicyclic structure as essential components; and an aqueous medium, wherein
a ratio of the unsaturated monomer (b3) in the unsaturated monomer mixture (B) is in a range of 3 to 60% by mass,
a ratio of the methyl methacrylate in the unsaturated monomer mixture (B) is in a range of 20 to 80% by mass, and a ratio of the unsaturated monomer (b1) in the unsaturated monomer mixture (B) is in a range of 1 to 50% by mass.

2. The aqueous resin composition according to claim 1, wherein a ratio of the unsaturated monomer (b2) in the unsaturated monomer mixture (B) is in a range of 1 to 10% by mass.

3. The aqueous resin composition according to claim 1 or 2, wherein a mass ratio [(A)/(B)] of the polycarbonate diol (A) to the unsaturated monomer mixture (B) is in a range of 2/100 to 60/100.

4. The aqueous resin composition according to any one of claims 1 to 3, wherein the unsaturated monomer (b3) is cyclohexyl (meth)acrylate.

5. An aqueous paint comprising:
the aqueous resin composition according to any one of claims 1 to 4; and
a curing agent.

6. A plastic molded article coated with the aqueous paint according to claim 5.

## Patentansprüche

1. Wässrige Harzzusammensetzung, die umfasst:
ein Polycarbonat-modifiziertes Acrylharz, das ein Reaktionsprodukt eines Polycarbonatdiols (A), das aus 1,4-Butandiol als wesentliches Rohmaterial hergestellt ist, und einer ungesättigten Monomermischung (B) ist, die Methylmethacrylat, ein ungesättigtes Monomer (b1) mit einer Hydroxygruppe, ein ungesättigtes Monomer (b2) mit einer Carboxygruppe und ein ungesättigtes Monomer (b3) mit einer alicyclischen Struktur als wesentliche Komponenten enthält; und ein wässriges Medium, wobei
ein Anteil des ungesättigten Monomers (b3) in der ungesättigten Monomermischung (B) in einem Bereich von 3 bis 60 Massen-% liegt,
ein Anteil des Methylmethacrylats in der ungesättigten Monomermischung (B) in einem Bereich von 20 bis 80 Massen-% liegt, und ein Anteil des ungesättigten Monomers (b1) in der ungesättigten Monomermischung (B) in einem Bereich von 1 bis 50 Massen-% liegt.

2. Wässrige Harzzusammensetzung nach Anspruch 1, wobei ein Anteil des ungesättigten Monomers (b2) in der ungesättigten Monomermischung (B) im Bereich von 1 bis 10 Massen-% liegt.

3. Wässrige Harzzusammensetzung nach Anspruch 1 oder 2, wobei ein Massenverhältnis [(A)/(B)] des Polycarbonatdiols (A) zu der ungesättigten Monomermischung (B) im Bereich von 2/100 bis 60/100 liegt.

4. Wässrige Harzzusammensetzung nach einem der Ansprüche 1 bis 3, wobei das ungesättigte Monomer (b3) Cyclohexyl(meth)acrylat ist.

5. Wässriger Anstrich, der umfasst:
die wässrige Harzzusammensetzung nach einem der Ansprüche 1 bis 4; und
ein Härtungsmittel.

6. Kunststoff-Formteil, das mit dem wässrigen Anstrich nach Anspruch 5 beschichtet ist.

## Revendications

1. Composition aqueuse de résine comprenant :
une résine acrylique modifiée par polycarbonate qui est un produit de réaction d'un diol polycarbonate (A) fabriqué à partir de 1,4-butanediol comme matière première essentielle et un mélange de monomères insaturés (B) contenant du méthacrylate de méthyle, un monomère insaturé (b1) ayant un groupe hydroxy, un monomère insaturé (b2) ayant un groupe carboxy, et un monomère insaturé (b3) ayant une structure alicyclique comme composants essentiels ; et un milieu aqueux, dans laquelle
un rapport du monomère insaturé (b3) dans le mélange de monomères insaturés (B) est compris entre 3 et 60 % en masse,
un rapport du méthacrylate de méthyle dans le mélange de monomères insaturés (B) est compris entre 20 et 80 % en masse, et un rapport du monomère insaturé (b1) dans le mélange de monomères insaturés (B) est compris entre 1 et 50 % en masse.

2. Composition aqueuse de résine selon la revendication 1, dans laquelle un rapport du monomère insaturé (b2) dans le mélange de monomères insaturés (B) est compris entre 1 et 10 % en masse.

3. Composition aqueuse de résine selon la revendication 1 ou 2, dans laquelle un rapport massique [(A)/(B)] du diol polycarbonate (A) dans le mélange de monomères insaturés (B) est compris entre 2/100 et 60/100.

4. Composition aqueuse de résine selon l'une quelconque des revendications 1 à 3, dans laquelle le monomère insaturé (b3) est le (méth)acrylate de cyclohexyle.

5. Peinture aqueuse comprenant :
la composition aqueuse de résine selon l'une quelconque des revendications 1 à 4 ; et un agent de durcissement.

6. Article moulé en plastique revêtu de la peinture aqueuse selon la revendication 5.
